# EUROPEAN PATENT APPLICATION

(11) **EP 4 212 871 A1**
(43) Date of publication of application: **19.07.2023**
(21) Application number: 21865909.2
(22) Date of filing: 02.09.2021
(51) Int. Cl.: G01N 30/02, G01N 30/24, G01N 30/72

(54) **COMBINED DEVICE OF LIQUID MASS SPECTROMETRY SAMPLING AND ELECTROSPRAY**

(30) Priority: 08.09.2020 CN 202010935536
(71) Applicant: Guangdong Lianjie Biotechnology Co., Ltd., Dongguan, Guangdong 523808 (CN)
(72) Inventor: ZHU, Janshon, Dongguan, Guangdong 523808 (CN)
(74) Representative: Fuchs Patentanwälte Partnerschaft mbB
(86) International application number: PCT/CN2021/116191
(87) International publication number: WO 2022/052855

(57) **Abstract**

The present disclosure is applicable to the field of analytical instruments, and provides a multifunctional probe for sample pickup, delivery and electrospray ionization used for direct sample analysis with a liquid-phase mass spectrometer. The multifunctional probe comprises a needle body and a tip part, wherein said tip part is continuously contracted from the needle body in whole or in part, and said tip part is provided with a solution carrying structure. The present disclosure further provides a combined sample introduction and electrospray device for liquid-phase mass spectrometry comprising said multifunctional probe, further comprising a mechanical arm and an ion source with a sealed chamber and a needle port on the sealed chamber.

## Description

### TECHNICAL FIELD

The present disclosure belongs to the field of analytical instruments, and in particular relates to a multifunctional probe which picks up a sample by dipping it in a sample solution and ionizes the sample via electrospray on its tip, and a combined device to facilitate sampling and electrospray for liquid-phase mass spectrometry.

### BACKGROUND

The liquid-phase mass spectrometer is one of the most advanced chemical analytical instruments at present, which guides the development direction of analytical instruments. As the most basic functional component of the mass spectrometry system, the ion source largely determines the sensitivity, accuracy, and application range of the mass spectrometer. At present, electrospray ion source is the most widely used in liquid-phase mass spectrometry, the application scope of which covers the analysis and detection of biological macromolecules and inorganic and organic small molecules, opening a new era of modern mass spectrometry.

The existing electrospray ion source atomizes the solution flowing to the outlet of a capillary tube by high-voltage discharge at the outlet tip. Ionizing of the solute in the solution occurs amid the mist of the spray. The outlet of the capillary tube must be in the shape of a needle tip. At present, the generally accepted ionization mechanism is that the sample solution delivered to the tip of the outlet of the capillary tube naturally forms a conical liquid cone. Several thousand volts of voltage applied to the tip of the capillary tube is transferred to the surface of the liquid cone to make it charged. The high-density surface charge forces a liquid bead to burst and form fog droplets with high charge. During the flight, the solvent in the fog droplets is continuously evaporated, the volume is constantly reduced, and the surface charge density is constantly increased. When the charge density on the surface of the fog droplets exceeds the surface tension limit (also referred to as Rayleigh limit), Coulomb explosion will occur, forming finer fog droplets. This process will be repeated many times in a short time, eventually leading to the larger molecules in the sample carrying one or more protons or shedding one or more protons and flying from the charged fog droplets, resulting in single-charged or multi-charged gaseous ions. Proton addition generates monovalent or multivalent positive ions, while proton shedding generates monovalent or multivalent negative ions. The working principle of the mass spectrometer is to collect and separate these ions by mass and then detect the ions.

Currently, there are generally two ways to introduce a sample solution into an electrospray ion source. One is to use a liquid chromatography (LC) hyphened to a mass spectrometer (MS) system, i.e. LC/MS system, to introduce the sample first into the chromatography where a mobile phase at a high flow rate (mostly 0.1-2.0 ml/min) carries the sample through a chromatographic column to separate it into individual components. After the components in the sample are separated by the chromatographic column, the components are introduced into the ion source by a capillary tube, abutted with the spray capillary tube inside the ion source, and atomized and ionized under the double effects of high voltage and auxiliary spray gas. The generated ions are collected by the mass spectrometer for analysis and detection. The other way is infusion driven by a liquid pump or high voltage itself to deliver the sample solution to the tip of the spray needle inside the ion source. Electrospray ionization happens at the spray needle tip when a high voltage is applied. Sample infusion is usually used for optimizing the parameters of the mass spectrometer. The flow rate of infusion normally in the range of 1~20 microliter per minute. Such a low flow rate offers high spray atomization efficiency with little or no spray gas consumption needed. Thus, sample analysis with infusion offers higher sensitivity compare with LC/MS. However, low flow rate, although highly sensitive, would not offer stable signal and not be suitable for sample quantification. Nano-spray ion source is a typical example that offers extremely high sensitivity but cannot be adopted for quantitative analysis. An interesting point to note is that the sample flow in the nano-spray ion source is driven by the spray voltage itself, and the spray voltage is 1 to 2 kV The spray is carried out a few millimeters near the mass spectrometry sample inlet, and the spray efficiency is extremely high. Even if a matrix exists in the solution, the spray efficiency will not be greatly affected. The nano-spray ionization efficiency is very high, but it is usually only used for mass spectrometry qualitative analysis of biomacromolecules such as protein or DNA. Because the obtained mass spectrum signal is unstable, it cannot be used for quantitative analysis.

For electrospray, under a given voltage and the same spray needle conditions, the smaller the spray rate (µL/min) the higher the ionization efficiency and the less the matrix effect. However, lower spray rate than 50 µL/min may result in unstable the signal that is not suitable for quantitative analysis. Should the nano-spray ion source have offered signals stable enough for sample quantification, LC in the LC/MS would have become unnecessary. The actual functionality of the LC in LC/MS is to eliminate matrix effect by separating the analytes from the matrix in the sample that is, to separate the matrix in the sample that may affect the electrospray efficiency from the object to be tested, so that the object to be tested can enter the ion source in a relatively simple state and be electro-sprayed and ionized. If there is no chromatographic separation, the matrix in the sample may seriously hinder the atomization of the sample solution in the electrospray ion source, so that the mass spectrum signal of the object to be tested is generally reduced or even cannot be tested at all. As to the LC contribution to the resolution of analyte signals, such contribution is totally ignorable in the LC/MS hyphened system since the worse resolution of a modern mass spectrometer is about countless times while unit resolution is the best for an LC. Therefore, an LC in the LC/MS has only two functions: removing the matrix effect and stabilizing the electrospray signal, both of which are necessary for quantitative analysis. However, the cost of using the liquid chromatography as the front end for mass spectrometry is that a lot of manpower and instrument time are spent to develop methods. The analysis time is prolonged from one or few seconds to several minutes. An LC/MS system is also very prone to blockage, liquid leakage, column deterioration, ion source pollution, etc. problems mostly attribute to the LC portion. Because of the frequent error and failure, LC/MS is currently one of the most difficult instruments in the analytical field. Although coupling an LC with electrospray offers quantifiable signals, the sensitivity is partially sacrificed due to the large flowrate that renders low spray, i.e. ionization, efficiency. The sensitivity of the LC/MS electrospray ion sources is generally more than 100 times lower than that of a nano-spray ion source.

Obviously, if a stable ion source with spray efficiency comparable to nano-spray can be invented, the sample solution to be tested can be directly introduced into the mass spectrometer for quantification, and a sample can be analyzed in a few seconds. Moreover, the instrument system becomes simple and stable, the operation becomes easy and convenient, the matrix effect becomes inconspicuous, and the sensitivity may be increased by orders of magnitude.

At present, there are many devices for quantitative analysis of the mass spectrometry by micro-spraying. The DART (Direct Analysis at Real Time) ion source and the paper spraying device are two typical examples of ambient mass spectrometric products gained widespread recognitions. DART uses needle tip discharge to dissociate carrier gas to form plasma, and plasma flame bombards sample liquid spot to ionize the object to be tested. The sensitivity of DART is comparable to that of common electrospray ion sources, but DART can be used for quantitative determination of samples such as biological slices directly. Many in-situ ionization mass spectrometry devices are similar to DART. The paper spray ion source uses a piece of paper cut into a long sharp triangle. Sample analysis is by spotting the sample solution in the middle of the triangular paper, moistening the paper with a solvent, and then apply high voltage to the wet paper with the sharp corner of the triangle pointing to the mass spectrometer inlet to facilitate electrospray of the sample. Paper spray usually offers lower sensitivity and stability than LC/MS. Both DART and paper spray share the same drawbacks of difficult in automation.

### SUMMARY

The purpose of the embodiment of the present disclosure is to provide a combined device for sample dipping, transportation, and electrospray in a liquid-phase mass spectrometer, aiming at solving the problems in the existing liquid-phase mass spectrometry.

The embodiment of the present disclosure is realized as follows: a multifunctional probe for sample pickup, delivery, and ionization for liquid-phase mass spectrometry comprising a needle body and a tip part, wherein said tip part is continuously contracted from the needle body in whole or in part. Furthermore, said tip part is provided with a solution carrying structure comprising one or more liquid-retaining grooves, and the end of the grooves merges at the end point of said tip part.

Further, the liquid-retaining groove is a capillary tube with a beveled tip.

Further, said one or more liquid-retaining grooves are a plurality of parallel grooves in linear line or winding shape. The ends of said grooves merge at the end point of said tip part.

Further, said one or more liquid-retaining grooves are one or more spiral grooves surrounding said tip part and merge at the end point of said tip part.

Further, the depth of said one or more liquid-retaining grooves does not exceed the radius of the needle body.

Further, the cross section of said one or more liquid-retaining grooves is substantially V-shaped, U-shaped or Ω-shaped.

Further, the outer surface of said tip part and the inner surface of said one or more liquid-retaining grooves are provided with a non-stick layer of no more than 50 µm.

Further, a part or all said tip part is made of conductive material, and when a part of said tip part is made of conductive material, a device is provided for connecting spray voltage to said tip part.

Further, the multifunctional probe is configured for mass spectrometric analysis of blood samples, the one of more solution on said tip part is filled with a polar adsorbing material.

Further, the polar adsorbing materials are selected from plant fibers, chemically modified plan fibers with enhanced polarity, silica gel particles with polar groups bonded on the surface, nanomaterials with incomplete carbonization or re-bonded polar groups, and the combination thereof.

Further, the multifunctional probe has only one tip.

Further, the multifunctional probe further comprises an abutting structure that comprises an injecting needle connecting sleeve, a magnetic rod, a magnetic attraction rod or a connector with a bayonet.

Further, one embodiment of the present disclosure provides a combined device, which comprises said multifunction probe, and further comprises an ion source sealed chamber, wherein the ion source sealed chamber is hermetically coupled and relatively fixed with a mass spectrometer inlet of the mass spectrometer. Said ion source sealed chamber has a sample-injecting needle port is provided with a needle inlet to allow said multifunctional probe penetrating through into the inside of said cavity. Further, the combined device for liquid-phase mass spectrometry sampling and electrospray further comprises a sample-injecting mechanical arm, which is configured to drive the multifunctional probe to dip into the sample from a position where the sample is located, and then moves to the needle port and descends through the needle port to extend into the sealed chamber to reach the fixed spraying position. Said mechanical arm is a robotic device with multi-dimensional motion capability driven by linear or rotary motors, or the combination thereof.

Further, the position of the sample-injecting needle port on the ion source sealed chamber is arranged in such a way that after the multifunctional probe penetrates the needle port, the needle tip is aligned with the mass spectrometer inlet and is 2~20 mm far away from the mass spectrometer inlet.

Further, the needle port is further provided with a high-voltage connection mechanism for applying DC high voltage of 1-7 kV to the sample solution on said multifunctional probe.

The embodiment of the present disclosure further provides a method for sample introduction to the liquid-phase mass spectrometer, comprising: S1 picking up small amount of sample solution, and delivering it to the ion source of a mass spectrometer by said multifunctional probe.

Further, the method further comprises: S2 inserting said multifunctional probe into the ion source sealed chamber applying a high voltage to the tip of the probe to facilitate electrospray for the sample ionization.

The present disclosure has the following advantages: (1) multifunctional probe, combining sampling, sample conveying in a single needle probe; (2) extremely high spray efficiency, resulting in fog droplets with diameter less than 1 µm; (3) stable signal, relative deviation of repeated sample-injections always being less than 15%, satisfying the requirements for mass spectrometric quantification; (4) significantly decreased matrix effect, extracts from both spiked blood samples and pure standard samples of the same analyte concentration yielding comparable signal strength when tested by a mass spectrometer using said multifunctional probe that the matrix in blood samples will not have obvious inhibition effect on mass spectrum signals; (5) very small sample amount (about 0.1-10 µL) required for each analysis, no pump nor injection valve needed for sample introduction to the mass spectrometer, and very fast needle cleaning; (6) no auxiliary gas consumption; (7) sensitivity 2 to 100 times higher than that of LC/MS; (8) no LC is needed and therefore free of problems caused by LC, mass spectrometric analysis becoming more sensitive, simpler, and faster; (9) very high throughput, 5 to 50 times higher than any individual LC/MS system; (10) low cost, reducing hardware of LC/MS more than 20% cost, and saving labor and consumables costs for sample analysis by > 80%.

### BRIEF DESCRIPTION OF THE DRAWINGS

FIG. 1 is an overall schematic diagram of a combined device for direct sample introduction and ionization of liquid-phase mass spectrometry according to an embodiment of the present disclosure.
FIG. 2a, FIG. 2b and FIG. 2c are schematic diagrams of a multifunctional probe according to an embodiment of the present disclosure, wherein said tip part has a channel.
FIG. 3 is a schematic diagram of a multifunctional probe with a plurality of parallel grooves engraved on the surface of the needle according to an embodiment of the present disclosure.
FIG. 4 is a schematic diagram of a multifunctional probe with a threaded channel engraved on the surface of the needle according to an embodiment of the present disclosure.
FIG. 5 is a schematic diagram of a multifunctional probe with capillary according to an embodiment of the present disclosure.

### DETAILED DESCRIPTION OF THE EMBODIMENTS

To make clearly elaborate the technical problems to be solved, the technical schemes, and the beneficial effects by the present disclosure, the present disclosure will be further explained in detail in reference to the drawings and embodiments. It should be appreciated that the specific embodiments described herein are only for elucidating rather than limiting the present disclosure.

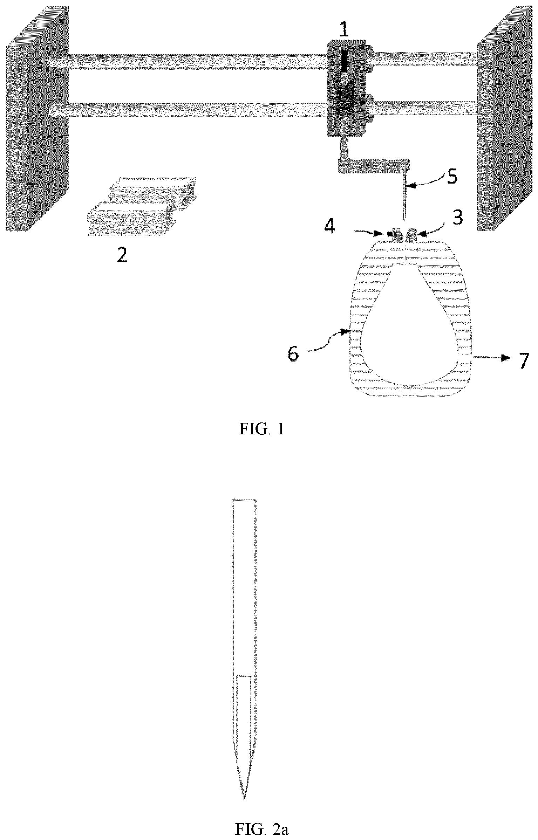

As shown in FIG. 1, the present disclosure provides a combined device of direct sample-introduction and ionization for liquid-phase mass spectrometric analysis. Said combined device comprises a mechanical arm 1, a sample holder 2, an injecting needle port 3, a high-voltage connector 4, a multifunctional probe for sample pickup and delivery 5, an ion source sealed chamber 6 and a mass spectrometer inlet 7, wherein the sample tray is configured for storing unknown or standard samples to be tested. The needle port 3 is located at the end (moving end) of the sample-injecting mechanical arm 1. The relative location of said needle port near the farthest end of motion of said mechanical arm 1. The high-voltage connector 4 and said multifunctional probe 5 are connected with the needle port 3. The ion source sealed chamber 6 and the mass spectrometer inlet 7 are provided on the mass spectrometer (not shown in the figure). Said multifunctional probe 5 can be inserted into the ion source sealed chamber 6 to perform electrospray ionization on the sample for mass spectrometric detection. In the specific operation process, the needle port 3 and the ion source sealed chamber 6 are fixed with respect to the mass spectrometer, and the mechanical arm 1 drives said multifunctional probe 5 to complete the motion cycle of sample pickup, and delivery.

The proportion shown in the drawings in the present disclosure is only for schematic purposes, and is not used for limiting the dimensions of the related components.

The present disclosure provides a device for direct sample introduction and ionization in liquid-phase mass spectrometry. Said device comprises a multifunctional probe that picks up the sample, delivers it to the ion source of the mass spectrometer, and sprays the sample under high voltage to ionize the analytes in the sample. Said multifunctional probe operates in acupuncture style. Sample analysis with said multifunctional probe is quick and simple resulting in significant efficiency enhancement for liquid-phase mass spectrometry.

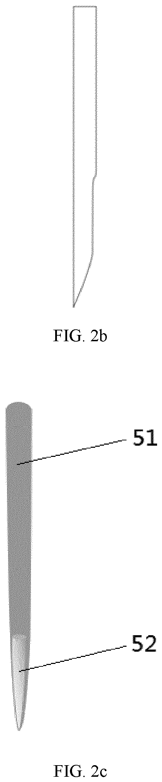

Specifically, as shown in FIGS. 2a-2c and FIGS. 3-5, said multifunctional probe 5 comprises a needle body 51 and a tip part 52, wherein said tip part is continuously and smoothly contracted from the needle body in whole or in part. There is only one tip for each multifunctional probe. Said multifunctional probe 5 can be used as a disposable item to be discarded or recycled after use. In this case, carry-over or needle washing would be completely avoided. In other embodiments, said multifunctional probe 5 can be repeatedly used by a quick plasma washing.

Specifically, said multifunctional probe 5 may be made of metal, ceramic, quartz and glass with high strength, good chemical stability, good rigidity, low brittleness, and high-strength alloy. Materials such as stainless steel, tungsten steel and high-carbon steel are preferred. If said multifunctional probe 5 is made of an insulating material, a conductive means needs to be arranged in the channel on the needle, and the conductive structure converges into a conductive point or a conductive ring on the surface of the needle above the channel, so as to provide high voltage connection to the tip of said multifunctional probe or the sample solution on the probe to ensure electrospray. The needle body can be a solid structure, preferably a columnar structure. A columnar structure makes installation of said multifunctional probe 5 easier than many other structures. Said tip part is provided with a solution carrying structure, which can carry the sample solution by capillary effect without dripping or quickly evaporating during sample delivery. The volume of the liquid sample carried by said tip part is much smaller than an ordinary sample injection volume. Specifically, the solution carrying mechanism is structured to have one or more liquid-retaining grooves . The end of each liquid-retaining groove merges at the end point of said tip part. Said liquid-retaining grooves each has a length of 10 to 35 mm on a needle with diameter 0.2 to 3 mm, preferably 0.4 to 1.7 mm. The length, depth and shape of said liquid-retaining grooves may be arbitrarily selected according to the operation or installation requirements. However, the width of said liquid-retaining grooves should not exceed the radius of the needle, preferably 0.1 mm to the radius of the needle. The depth of said liquid-retaining grooves is from 0.1 mm to cutting-through the needle body. The shape of longitudinal direction of said liquid-retaining grooves is straight, curved, or spiral around the needle. The cross section of said liquid-retaining grooves can be V-shaped, U-shaped, Ω-shaped or in any other shape. The diameter of said multifunctional probe is preferably 0.5 to 1.5 mm. The tip part of said multifunctional probe is about 3 to 3.5 mm in length at the tip part (including the inner surface of the channel) is preferably smooth and non-sticky (no absorption). A layer of no more than 50 µm in thickness may be generated by surface treatment cover the specific surface. For example, such a non-stick layer may be Teflon coating or other coating materials. Common surface treatment processes such as plasma spraying, electropolishing, electroplating, coating, etc. may be employed to form a dense thin layer of metal oxide, epoxy resin, polytetrafluoroethylene, or graphene on the surface of the needle tip part. In addition, the liquid-retaining grooves of said multifunctional probe 5 tightly filled or coated with a kind of adsorption material, such as silica gel, fiber, activated carbon, bentonite, or a strong polar filler made from chemical modification of the aforementioned materials. The purpose of filling said liquid-retaining grooves with special adsorption materials is to achieve the effect that the components in the sample are separated in the electrospray process and then enter the atomization cloud to be ionized in sequence. In a specific embodiment, the needle tip is a hollow with a long-beveled opening, the length of the needle is about 1 to 5 mm. The needle body is above the bevel opening, and the top end is further provided with an abutting structure such as an injecting needle connecting sleeve (Luer connector), a magnetic rod, a magnetic attraction rod, a connector with a bayonet or any device that can be easily grabbed or abutted manually or by the mechanical arm of an automatic sample injector.

FIGS. 2a-2c show an embodiment of a multifunctional probe according to the present disclosure. Said multifunctional probe provided by this embodiment is a metal solid needle, and said tip part of the needle has only one channel, which is located at the center said tip part of said multifunctional probe. The needle tip is an oblique cut, shaped like a medicine spoon for laboratory use. The cross section of the channel is Ω-shaped, with a length of 3 to 10 mm. The total length of the needle is 50 to 150 mm, the needle tip is 25 to 50 mm for sample-injecting and spraying, the diameter is 0.4 to 1 mm, and the diameter of the needle body is 1.5 to 3 mm. According to the size of the channel on the needle tip, the amount of the sample solution dipped by said multifunctional probe should not exceed 5 µL each time, preferably 0.5 to 2 µL.

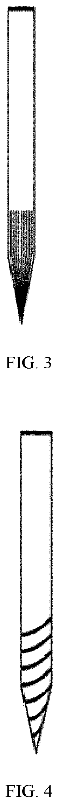

FIG. 3 shows another embodiment of a multifunctional probe according to the present disclosure. Said multifunctional probe provided by this embodiment is a solid metal needle with a plurality of parallel liquid-retaining grooves on the surface, and the grooves are located at the periphery of said tip part of said multifunctional probe. The diameter of the needle body is 0.3 to 2 mm, the length of the whole needle is 30 to 35 mm, and the contracted length of the tip is 3 to 10 mm. The grooves are straight lines or "S" lines converging to the tip. Each said liquid-retaining groove has a length of 3 to 20 mm and a depth of 0.1 to 1 mm. The number of channels is unlimited, and the surface of the tip part of the multifunctional probe can be fully engraved at most.

FIG. 4 shows another embodiment of a multifunctional probe according to the present disclosure. Said multifunctional probe provided by this embodiment is a metal needle with a groove engraved on the periphery of its tip part. The diameter of the needle body is 0.3 to 2 mm, the length of the whole needle is 30 to 35 mm, and the length of contracted portion until the tip is 3 to 10 mm. There may be one or more liquid-retaining grooves. The grooves can be spiral around the tip part of said multifunctional probe from 3 to 20 mm above the needle tip down to the very end of its tip. The depth of each groove needs to be at least ~ 0.1 mm. Above the tip the groove can be as deep as penetrating through the needle.

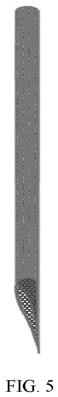

FIG. 5 shows another embodiment of a multifunctional probe according to the present disclosure. Said multifunctional probe provided by this embodiment is used for direct mass spectrometric analysis of blood samples. When measuring the concentration of blood samples, a multifunctional probe is made by a capillary tube with one end obliquely cut into beveled tip. The capillary tube and the beveled tip is filled with highly polar adsorption materials, for example, plant fibers, chemically modified fibers polarity enhanced characteristics, silica gel particles with polar groups bonded on the surface, or nanomaterials with incomplete carbonization or bonded polar groups, and so on. These materials have strong adsorption on blood matrix species with high polarity and/or high water-solubility, but have weak adsorption on most drug molecules. When said multifunctional probe dips into the blood sample, the matrix species in the blood sample are adsorbed on the adsorption materials. During electrospray, the strongly adsorbed species does not flow to the needle tip of said multifunctional probe to spray, only the liquid in the blood sample undergoes spraying, so therefore matrix effect does not occur. In this embodiment, anticoagulants may be added to the blood samples. One to three folds volume of water may also be added to lower the viscosity of blood samples. Another precaution step for alleviate matrix effect is to precipitate proteins in the blood sample by adding precipitants such as methanol, acetonitrile, perchloric acid, etc., then sampling the supernatant by said multifunctional probe for testing. To ensure secured filling, the absorption materials may mix with 0.1% to 3% adhesives to glue in the grooves of said multifunctional probe. After dry, the adhesives used for gluing must be insoluble in sample solvent such as water, methanol, and acetonitrile.

The above multifunctional probe 5 is installed onto the free moving end of the mechanical arm 1. The mechanical arm 1 slides on the spline shaft to move said multifunctional probe 5 to accomplish its sample handling cycle from sample pickup to sample ionization, as shown in FIG. 1. The movement range of the mechanical arm must at least cover all the sample locations on the sample tray 2 and the needle port 3 on the ion source of the mass spectrometer, so as to realize the automatic operation of sampling and sample-injecting. The top of the needle port 3 is a funnel-shaped to ensure needle insertion smoother. The needle port 3 is fixed on the outer shell of the ion source sealed chamber 6 with a hole in the center to allow said multifunctional probe 5 to enter and exit the sealed chamber freely. The specific fixing method needs to ensure that the needle tip can be aligned with the mass spectrometer inlet 7 after the multifunctional probe 5 penetrates through the needle base. The distance from the mass spectrometer inlet 7 is 2 to 20 mm, and preferably the included angle with the centerline of the mass spectrometer inlet 7 is 0 to 90 degrees.

In the specific embodiment, the automatic sample injector is matched with the mass spectrometer, and the position with respect to the mass spectrometer is fixed.

Specifically, the ion source sealed chamber 6 is hermetically abutted and relatively fixed with the mass spectrometer inlet 7, and isolated from the external environment. The inside of the ion source sealed chamber is in vacuum communication with the inside of the mass spectrometer through the mass spectrometer inlet 7. The internal volume of the ion source sealed chamber 6 can at least accommodate the ellipsoidal atomization cloud formed by spraying from the tip of said multifunctional probe 5 therein, in which the major axis is 5 to 30 mm and the minor axis is 5 to 20 mm. The needle port 3 further comprises a high-voltage connector 4 provided at the inner side of the needle inlet, which is used to apply high voltage of 1 to 7 kV to the sample solution on said multifunctional probe 5. The high-voltage connector 4 can be any conductive connector that can be in stable contact with the conductive part of said multifunctional probe 5. Said conductive contactor can be made by an elastic metal piece, a hole with an inner diameter equal the outer diameter of the conductive part of said multifunctional probe 5, a conductive ring with conductive tentacles in its inner side to ensure electric connection to said multifunctional probe, and so on. One end of a high-voltage transmission wire is connected with the high-voltage connector 4, and the other end thereof is connected with a spray voltage power supply of the mass spectrometer. For safety, the exposed part of said high-voltage connector 4 is wrapped by an insulator or hidden in a structure inaccessible to human hands.

The embodiment of the present disclosure further provides an integrated system comprising the above combined device for direct sample introduction and ionization for liquid-phase mass spectrometry.

The operation of the integrated sample introduction and ionization system for liquid-phase mass spectrometry provided by the embodiment of the present disclosure comprises a sequence of actions driven by the mechanical arm 1. The sequence of mechanical arm actions starts from moving said multifunctional probe 5 to the designated sample vial in the sample tray 2, punching it through the sealing pad at the top of the sample vial, immersing the liquid-retaining grooves on its tip part in the sample solution for 1 to 2 seconds to completely fill the grooves, then pulling it out from the sample solution. When said multifunctional probe is pulled out from the sample vial, the sealing pad of the sample vial only wipes the solution on the surface of the probe without eliminating the solution inside the liquid-retaining grooves. Capillary effect of the grooves can prevent sample solution in the grooves not only from moving but also from dripping during transportation to the sealed chamber. The optimized position of said multifunctional probe inside the sealed chamber is positioned with its tip aligned with the mass spectrometer inlet 7 and 2 to 20 mm away from the inlet at an angle of 0 to 90 degrees facing the inlet. At this optimized position, said multifunctional probe 5 acts as an electrospray needle. The high voltage of 1-7 kV is then applied to the tip of said multifunctional probe to facilitate electrospray ionization on the carried sample solution in the liquid-retaining grooves. The ion collection potential at the mass spectrometer inlet and the vacuum suction inside the mass spectrometer drive the ions generated from the electrospray into the mass spectrometer for detection. The ion collection efficiency could reach 100% when the sealed chamber is under vacuum condition and the inlet of the mass spectrometer is an open pathway.

The embodiment of the present disclosure further provides an integrated operation method of sample introduction and ionization of liquid-phase mass spectrometry, which is implemented by the above system.

The integrated sample introduction and ionization system for liquid-phase mass spectrometry according to the present disclosure has the following advantages: (1) the needle has multifunction for sample pickup, sample delivery; (2) the atomization efficiency is extremely high resulting in droplets less than 1µm in diameter; (3) the resulted mass spectrometric signal has been repeatedly tested to have a relative standard deviation less than 15%, which meets the requirements for mass spectrometric quantification; (4) matrix effect is significantly reduced based on the fact that a pure standard solution and a picked blood sample of the same concentration in its supernatant after protein precipitation result in similar signal strength; (5) said multifunctional probe delivers sample directly to analysis without resorting to any pump or injection valve, needs only very small amount of sample (0.1-10 µL) for each analysis, and can be very quickly cleaned for residue removal; (6) no sheath gas nor mobile phase solution is needed for sample analysis; (7) the sensitivity is 2 to 100 times higher than that of LC/MS; (8) the problems caused by using the liquid chromatography for sample input to the liquid-phase mass spectrometer are completely eliminated, so that mass spectrometric analysis becomes faster, and simpler, and more reliable; (9) the throughput of sample analysis becomes 5 to 50 times higher than that of an LC/MS system; (10) the hardware cost is more than 20% lower than that of an LC/MS, and the sample analysis cost is reduce more than 80% compare with LC/MS.

The above is only a preferred embodiment of the present disclosure, and it is not intended to limit the present disclosure. Any modifications, equivalent substitutions, and improvements made within the principles of the present disclosure should be included in the scope of protection of the present disclosure.

## Claims

1. A multifunctional probe for sample pickup, delivery and electrospray ionization for liquid-phase mass spectrometric analysis, comprising a needle body and a tip part, wherein said tip part is continuously contracted from the needle body in whole or in part, said tip part is provided with a solution carrying structure which comprises one or more liquid-retaining grooves, and an end of the one or more grooves coincides with an end of said tip part.

2. The multifunctional probe of claim 1, wherein each of the one or more grooves has a cross section of substantially V-shaped, U-shaped or S2-shaped.

3. The multifunctional probe of claim 1, wherein an outer surface of said tip part and an inner surface of the one or more grooves are simultaneously provided with a non-stick layer of no more than 50 µm in thickness.

4. The multifunctional probe of claim 1, wherein a part or all of said tip part is made of conductive material, and when a part of said tip part is made of conductive material, a device for connecting spray voltage is provided outside in connection with said tip part.

5. The multifunctional probe of any one of claims 1 to 4, wherein said multifunctional probe is configured for mass spectrometric analysis of blood samples, said tip part has an oblique cut edge with a polar adsorption material filled therein.

6. The multifunctional probe of claim 5, wherein the polar adsorption material is a plant fiber with enhanced polarity by chemical modification, silica gel particles with polar groups bonded on surface, a nanomaterial with incompletely carbonization and bonded polar groups, or a combination thereof.

7. A combined sample introduction and electrospray device for liquid-phase mass spectrometry, comprising the multifunctional probe of any one of claims 1 to 6, and further comprising an ion source sealed chamber, wherein the ion source sealed chamber is hermetically coupled with and relatively fixed on a mass spectrometer inlet, the ion source sealed chamber comprises a needle port, and the needle port has a needle inlet for inserting said multifunctional probe.

8. The device of claim 7, wherein the combined device further comprises a sample-injecting mechanical arm to perform automatic operation.

9. The device of claim 7 or 8, wherein the position of the needle port on the ion source sealed chamber is set in such a way that after said multifunctional probe penetrates the needle port, the tip of said multifunctional probe is aligned with the mass spectrometer inlet and is 2-20 mm away from the mass spectrometer inlet.

10. A sample introduction method for liquid-phase mass spectrometric analysis, comprising:
S1, sampling with the multifunctional probe of any one of claims 1 to 6;
S2, inserting the multifunctional probe into the ion source sealed chamber, wherein a tip of said multifunctional probe is aligned with the mass spectrometer inlet, and is sprayed under high voltage.
